# EUROPEAN PATENT APPLICATION

(11) **EP 1 548 965 A2**
(43) Date of publication of application: **29.06.2005**
(21) Application number: 04027265.0
(22) Date of filing: 17.11.2004
(51) Int. Cl.: H04J 14/02, H04J 3/16

(54) **Method and system for fiber protection in a passive optical network (PON)**

(30) Priority: 26.12.2003 US 746076
(71) Applicant: ALCATEL, 75008 Paris (FR)
(72) Inventor: Smith, Joseph L., North Carolina 27526 Fuquay Varina (US)
(74) Representative: Dreiss, Fuhlendorf, Steimle & Becker

(57) **Abstract**

A method for facilitating passive optical network fiber protection comprises facilitating transmission of bidirectional traffic utilizing a first optical fiber connected between a first port interface of an optical line termination and a first upstream fiber termination of a splitter, and facilitating fiber protection functionality utilizing a second optical fiber connected between a second port interface of the optical line termination and a second upstream fiber termination of the splitter fiber. The fiber protection functionality includes monitoring reception of traffic transmitted on the first optical fiber from at least one optical network termination unit, maintaining the second one of the port interfaces in an inactive state while transmission of the traffic is being successfully performed utilizing the first optical fiber; determining when a traffic error condition exists with respect to transmission of the traffic on the first optical fiber and facilitating transmission of the traffic on the second optical fiber after determining that the traffic error condition exists and after activating the second one of the port interfaces. Facilitating transmission of the traffic on the second optical fiber includes deactivating the first one of the port interfaces, activating the second one of the port interfaces and redirecting the traffic from the first one of the port interfaces to the second one of the port interfaces.

## Description

### FIELD OF THE DISCLOSURE

The disclosures made herein relate generally to passive optical networks and more particularly to methods and systems configured for providing passive optical network fiber protection.

### BACKGROUND

Passive Optical Networking (PON) enables the shared use of fiber for services such as data, voice and video over most of the distance between a central office and service subscriber sites. PON is significantly less expensive to deploy and operate due to the compact size and passive nature of much of the equipment comprised by the PON facilities. For example, a passive optical splitter that fans the fiber out to service subscribers in a PON is relatively small, uses no electronics and requires no power source.

Current and emerging PON solutions offer cost-effective, end-to-end solutions that are capable of delivering a combination of high-demand services. Specific examples of such current and emerging PON solutions include Broadband PON (BPON), Ethernet PON (EPON) and Gigabit PON (GPON). Examples of services that can be provided via such PON solutions include various types of telephony services, data transmission services and video services. Signals for such services are transported optically from the central office (CO) or headend (HE) to an optical-network termination unit (ONT) at a service subscriber's site. The ONT is configured to provide optical network termination functionality and, in some implementations, to also provide conventional network interface device functionality.

Current Bi-Directional PON solutions (e.g., International Telecommunication Union (ITU) standard G.983) provide for a single fiber to be deployed from the serving source (e.g., Optical Line Terminal (OLT) at the CO) out to each subscriber's ONT via the fiber Optical Distribution Network (ODN). This approach takes about 50% of the allowed voice circuit availability for a single POTS line just for the fiber related reliability and in turn makes for more challenging electronics design. Furthermore, conventional fiber protection approaches are limited in the protection they provide for fiber in the backbone of an Optical Distribution Network (ODN) within a PON.

Conventional solutions for providing fiber protection within the backbone of an ODN are known. One such conventional solution comprises a non-standard 1:N PON protection fiber design that requires optical switches at the CO and ONT. In this solution, one shortcoming is that cost is prohibitive (especially at the ONT) and the control mechanisms at both the OLT and ONT are generally complicated. Another such conventional solution comprises protection mechanisms and methodologies documented in the ITU G.983.5 standard, which enable enhanced survivability. In this solution, either the addition of "K byte" controls or grants have to be added to the OLT and ONT, thereby adding cost to the cost sensitive ONT along with adding to overall complexity and using bandwidth on the PON for control.

Therefore, methods and systems configured for providing PON fiber protection in a manner that overcomes shortcomings associated with conventional approaches for providing PON fiber protection would be advantageous and useful.

### BRIEF DESCRIPTION OF THE DRAWING FIGURES

FIG. 1 depicts a method for facilitating fiber protection in a PON in accordance with an embodiment of the disclosures made herein.
FIG. 2 depicts a PON system in accordance with a first embodiment of the disclosures made herein, which utilizes two standalone ODN backbone fibers for providing fiber protection functionality.
FIG. 3 depicts a PON system in accordance with a second embodiment of the disclosures made herein, which provides for fiber protection functionality by leveraging a fiber conventionally used for facilitating video injection.

### DETAILED DESCRIPTION OF THE DRAWING FIGURES

The disclosures made herein relate to facilitating fiber protection in a passive optical network. Specifically, methods and systems in accordance with embodiments of the disclosures made herein are novel and advantageous in that they implement redundancy of the OLT PON ports and ODN backbone fiber, while facilitating transmission of traffic in bi-directional manner on the ODN backbone fiber and the fiber between the ODN and ONT's. This allows for a single pair of fiber to provide for redundancy in the ODN backbone fiber.

Methods and systems in accordance with embodiments of the disclosures made herein do not require any changes to the ONT, which is advantageous as the ONT is one of the most cost-sensitive portions of a PON system. The ONT simply works with whatever fiber wavelengths it is designed to receive. Such methods and systems do require that two of the OLT's PON ports operate at the same nominal wavelength, which is an existing PON requirement, and that a means be provided for selectively redirecting traffic between the two ports (e.g., swapping traffic connection and altering routing map). While two PON ports for each PON need to be provided in order to provide the fiber protection in accordance with embodiments of the disclosures made herein, the costs associated with this requirement is divided by the "N" homes served by a single PON. Thus, cost sensitivity of methods and systems in accordance with embodiments of the disclosures made herein is significantly less than dedicated 1:1 protection required by conventional fiber protection approaches.

The reliability enhancement resulting from ODN backbone fiber protection in accordance with embodiments of the disclosures made herein is about a 75% reduction in expected downtime. The reliability enhancement effectively reduces the downtime contribution of the OLT PON ports and ODN backbone fiber to about zero. This approach to redundancy advantageously results in the ONT electronics and the fiber connected between the splitter of the ODN and each ONT being the predominant downtime contributors. This result is advantageous because these components of the PON are relatively robust. The fiber connected between the splitter of the ODN and each ONT is small percentage of the overall multi-kilometer link between the OLT and each ONT. Thus, the contribution of downtime estimates associated with the fiber connected between the splitter of the ODN and each ONT is relatively small. Similarly, the contribution of downtime estimates associated with the splitter is relatively small because it is a passive device.

In accordance with one embodiment of the disclosures made herein, a passive optical network system comprises an optical line termination including a plurality of port interfaces, a splitter including a plurality of upstream fiber terminations and a plurality of downstream fiber terminations, a plurality of optical fiber connected between a first one of the port interfaces and a first one of the upstream fiber terminations, and a traffic control module. The traffic control module is configured for facilitating transmission of bi-directional traffic utilizing the first optical fiber and facilitating fiber protection functionality utilizing the second optical fiber. The fiber protection functionality includes maintaining the second one of the port interfaces in an inactive state while transmission of the traffic is being successfully performed utilizing the first optical fiber, determining when a traffic error condition exists with respect to transmission of the traffic on the first optical fiber, and facilitating transmission of the traffic on the second optical fiber after determining that the traffic error condition exists and after activating the second one of the port interfaces. Facilitating transmission of the traffic on the second optical fiber includes deactivating the first one of the port interfaces, activating the second one of the port interfaces and redirecting the traffic from the first one of the port interfaces to the second one of the port interfaces.

In accordance with another embodiment of the disclosures made herein, a method for facilitating passive optical network fiber protection comprises facilitating transmission of bi-directional traffic and fiber protection functionality. The transmission of the bi-directional traffic is facilitated utilizing a first optical fiber connected between a first port interface of an optical line termination and a first upstream fiber termination of a splitter. The fiber protection functionality is facilitated utilizing a second optical fiber connected between a second port interface of the optical line termination and a second upstream fiber termination of the splitter fiber. The fiber protection functionality includes monitoring reception of traffic transmitted on the first optical fiber from at least one optical network termination unit, maintaining the second one of the port interfaces in an inactive state while transmission of the traffic is being successfully performed utilizing the first optical fiber, determining when a traffic error condition exists with respect to transmission of the traffic on the first optical fiber and facilitating transmission of the traffic on the second optical fiber after determining that the traffic error condition exists and after activating the second one of the port interfaces. Facilitating transmission of the traffic on the second optical fiber includes deactivating the first one of the port interfaces, activating the second one of the port interfaces and redirecting the traffic from the first one of the port interfaces to the second one of the port interfaces.

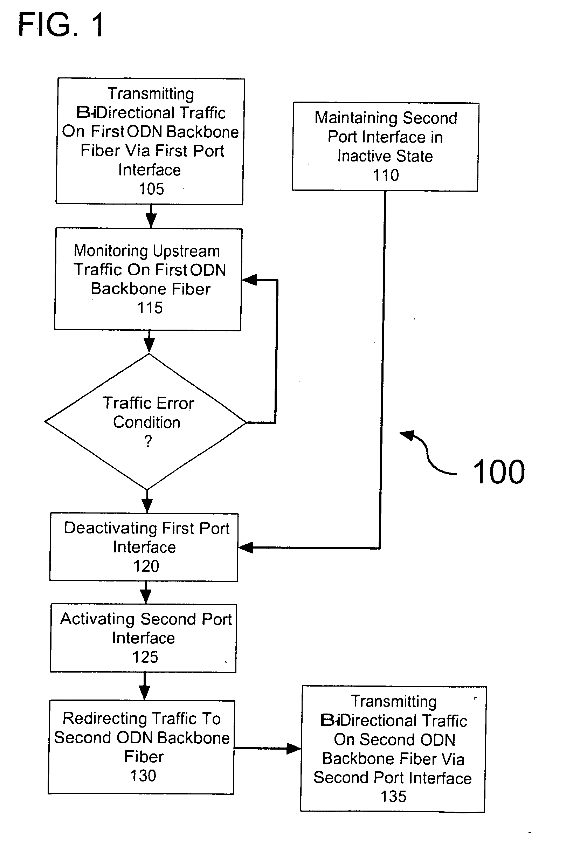

Turning now to discussion of specific drawings, a method 100 for facilitating fiber protection in a PON in accordance with an embodiment of the disclosures made herein is depicted in FIG. 1. An operation 105 is performed for facilitating transmission of bi-directional traffic on a first ODN backbone fiber via a first port interface of a signaling apparatus (e.g., an OLT). An operation 110 for setting (i.e., maintaining) a second port interface of the signaling apparatus in an inactive state is performed in conjunction with facilitating transmission of bi-directional traffic on a first ODN backbone fiber. An example of the inactive state is a port laser being deactivated and the port receiver being ignored. An operation 115 is performed for monitoring upstream traffic transmitted on the first ODN backbone fiber. Monitoring the upstream traffic transmitted on the first ODN backbone fiber includes determining any traffic error conditions that may exist (e.g., not receiving idle or keep alive packets) and trigger initiation of a protection switching process.

In response to a prescribed traffic error condition not being determined, the operation for monitoring the upstream traffic continues so long as the transmission of the traffic is being performed successfully. In response to a prescribed traffic error condition being determined, the protection switching process is implemented. One embodiment of the protection switching process includes performing an operation 120 for deactivating the first port interface and performing an operation 125 for activating the second port interface. After successfully activating the second port interface, an operation 130 is performed for redirecting the traffic (i.e., protected traffic) to the second port interface for enabling transmission of the traffic via the second ODN backbone fiber. After redirecting the traffic to the second ODN backbone fiber, an operation 135 is performed for facilitating transmission of the traffic on the second ODN backbone fiber via the second port interface.

An example of redirecting the traffic includes making appropriate logical and/or physical changes (e.g. patch panel and/or routing map changes) for directing traffic to second port interface rather than the first port interface. Downstream network components are unaffected by this action, with the exception that deactivation and activation of the port interface lasers causes the ONT's to re-acquire the respective received signals. Once they do, they continue to operate normally, with only a momentary interruption of signal. This is done without requiring any additional overhead or messaging between the OLT and ONT and relies simply on OLT receive data information as a trigger.

It is contemplated herein that monitoring of the upstream traffic may also be facilitated via the second ODN backbone fiber and second port interface. In such instance, upstream traffic on the second ODN backbone fiber is monitored for good cells using the inactive PON port's receiver. The protection switching process can then be supplemented with the inactive port's data to aid in determining the need for a switch.

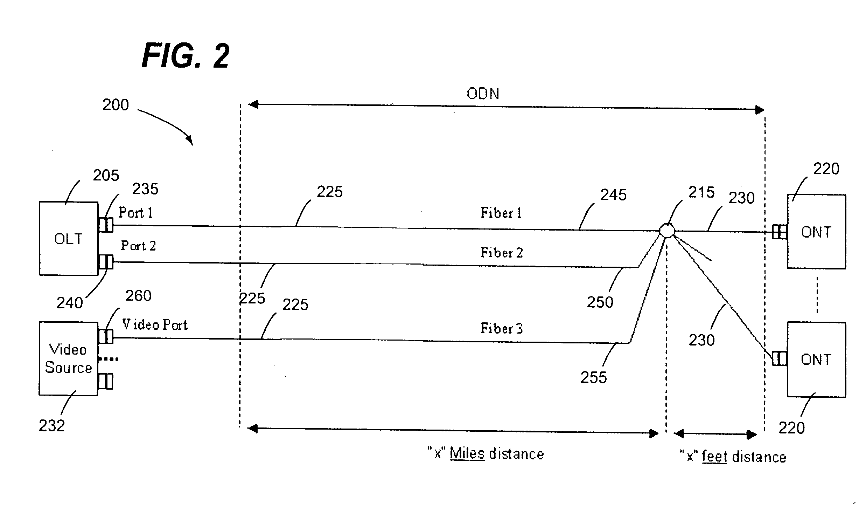

Fig. 2 depicts a PON system 200 in accordance with a first embodiment of the disclosures made herein. The PON system 200 includes an OLT 205, a 3:N splitter 215, a plurality of ONT's 220, a plurality of ODN backbone fibers 225, a plurality of ONT termination fibers 230 and a video source 232. The 3:N splitter 215 and the plurality of ODN backbone fibers 225 are comprised by the ODN of the PON system 200.

The OLT 205 includes a first port interface 235 and a second port interface 240. Each port interface includes a port laser for transmitting signals, a port receiver for receiving signals, and a physical port for enabling connection of a respective ODN backbone fiber to the OLT. The first port interface 235 and the second port interface 240 are separately operable.

The 3:N splitter 215 includes three upstream fiber terminations and a plurality (e.g., two or more) of downstream fiber terminations. A first fiber termination 245 of the ODN backbone fibers 225 is connected between the first port interface 235 of the OLT 205 and a first one of the upstream fiber terminations. A second fiber termination 250 of the ODN backbone fibers 225 is connected between the second port interface 240 of the OLT 205 and a second one of the upstream fiber terminations. A third fiber termination 255 of the ODN backbone fibers 225 is connected between a video port interface 260 of the video source 232 and a third one of the upstream fiber terminations.

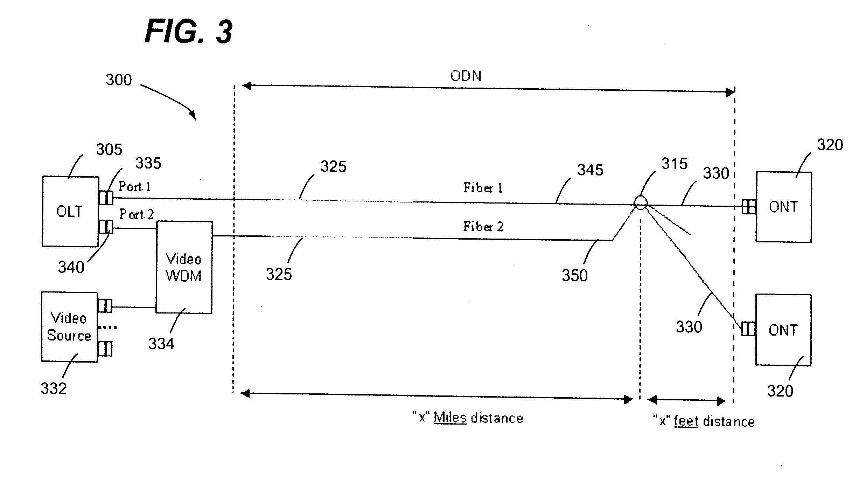

FIG. 3 depicts a PON system 300 in accordance with a second embodiment of the disclosures made herein. In a conventional PON system configured for providing video injection, a fiber is connected between the video source and a splitter. The PON system 300 leverages such conventional PON systems configurations as the conventional PON system already has two ODN backbone fibers connected to the splitter.

The PON system 300 includes an OLT 305, a 2:N splitter 315, a plurality of ONT's 320, a plurality of ODN backbone fibers 325, a plurality of ONT termination fibers 330, a video source 332 and a video injecting unit 334 (e.g., a video wave division multiplexor). The 3:N splitter 315 and the plurality of ODN backbone fibers 325 are comprised by the ODN of the PON system 300.

The OLT 305 includes a first port interface 335 and a second port interface 340. Each port interface includes a port laser for transmitting signals, a port receiver for receiving signals, and a physical port for enabling connection of a respective ODN backbone fiber to the OLT. The first port interface 335 and the second port interface 340 are separately operable.

The 2:N splitter 315 includes two upstream fiber terminations and a plurality (e.g., two or more) of downstream fiber terminations. A first fiber termination 345 of the ODN backbone fibers 325 is connected between the first port interface 335 of the OLT 305 and a first one of the upstream fiber terminations. A second fiber termination 350 of the ODN backbone fibers 325 is connected between the second port interface 340 of the OLT 305 and a second one of the upstream fiber terminations.

The video injection unit 334 is coupled to the second fiber termination 350 of the ODN backbone fibers 325 for incorporating (i.e., injecting) the video signal onto the second fiber termination 350 of the ODN backbone fibers 325. The second fiber termination 350 of the ODN backbone fibers 325 is a pre-existing ODN backbone fiber in a conventional PON system that is configured for video injection. By adding a slight additional loss for the video injection unit 334 (or by use of a 3^{rd} fiber resulting in no additional loss for the video injection unit 334, as depicted in the embodiment of FIG. 2), a pre-existing ODN backbone fiber used in a conventional PON system for video injection enables fiber protection functionality in accordance with an embodiment of the disclosures made herein.

It is contemplated and disclosed herein (e.g. the system 300) that fiber protection functionality in accordance with embodiments of the disclosures made herein may leverage the ODN backbone fiber provided for video injection in existing PON deployment solutions. This is advantageous as such fiber protection functionality is enabled without requiring the addition of optical switches or having to resort to otherwise unused fiber redundancy and new redundancy messages. This is important in that the fiber link from the splitter to the terminating ONT is still a single fiber for cost reasons and the fact that the distance, and hence reliability characteristics of the last couple hundred of feet is significantly less than the distance from the central office to the ODN splitter.

Advantageously, methods and systems in accordance with embodiments of the disclosures made herein are operable in either "normal" single-fiber mode or enhanced fiber "protection" mode simply by software provisioning. Because fiber protection functionality in accordance with embodiments of the disclosure made herein does not add any requirements that would affect a hardware change, existing hardware units can be used. This allows individual end customers to customize their deployments with regards to concerns for fiber reliability. In other words, the same physical interface cards for the both central office OLT PON ports can be same, as can be the ONTs. This assists in inventory management both for the vendor and the service provider. Only the ODN splitter and any video WDM devices are affected for carrying out such fiber protection functionality.

In instances where fused fiber construction is used within the ODN, which is typically the case, no excess loss is incurred by adding additional fibers at the upstream fiber terminations of a splitter having two or more upstream fiber terminations (e.g., a 2:N or 3:N splitter). As a result of the fused fiber construction, little to no additional losses in the splitter (normally the highest loss item in a PON) are encountered by using a splitter with more than one upstream fiber terminations. Thus, this allows the ODN loss calculation to not have to be changed as a result of the disclosed PON fiber protection functionality scheme (i.e. deployment planning is not affected).

From a cost standpoint, the cost differential between a 2:N or 3:N splitter and a typical 1:N splitter is negligible. This is because the additional upstream fiber terminations are already present on the 1:N splitter. They are just capped off internally and not used. Thus, exposing the upstream fiber terminations that are capped off in the 1:N splitter cost effectively provides for a 2:N or 3:N splitter.

Additional ODN backbone fibers are typically deployed in reasonably high fiber count fiber cable as construction costs for the multi-mile deployment path is significantly higher than the cost of the fiber cable itself. In at least some embodiments, such additional ODN backbone fibers enable fiber protection functionality in accordance with embodiments of the disclosures made herein in that one such additional fiber serves as a redundant ODN backbone fiber (i.e., a second ODN backbone fiber). Thus, methods and systems in accordance with embodiments of the disclosures made herein are advantageous in that they leverage what would otherwise be unused and/or unlit fibers in the PON backbone fiber cable distribution network.

Referring now to computer readable medium, methods, processes and/or operations adapted for carrying out fiber protection functionality as disclosed herein are tangibly embodied by computer readable medium having instructions thereon for carrying out such functionality. In one specific embodiment, the instructions are tangibly embodied for carrying out the method 100, disclosed above, for facilitating fiber protection in a PON. The instructions may be accessible by one or more data processors (e.g., of one or more functional modules within a PON) from a memory apparatus (e.g. RAM, ROM, virtual memory, hard drive memory, etc), from an apparatus readable by a drive unit of the data processing system (e.g., a diskette, a compact disk, a tape cartridge, etc) or both. Accordingly, examples of computer readable medium include a compact disk or a hard drive that has imaged thereon a computer program (i.e., a set of instructions) adapted for carrying out fiber protection functionality as disclosed herein.

The following features and/or combinations of features may also constitute advantageous embodiments of the described and/or claimed invention:
- The described and/or claimed system wherein the traffic control module is comprised by the optical line termination;
- The described and/or claimed method wherein facilitating transmission of said traffic on the second optical fiber includes deactivating the first one of said port interfaces, activating the second one of said port interfaces and redirecting said traffic from the first one of said port interfaces to the second one of said port interfaces;
- The described and/or claimed method wherein determining when the traffic error condition exists includes monitoring reception of traffic transmitted on the first optical fiber from at least one optical network termination unit.
- A passive optical network system, comprising: at least one data processing device; instructions processable by said at least one data processing device; and an apparatus from which said instructions are accessible by said at least one data processing device; wherein said instructions are configured for enabling said at least one data processing device to facilitate: transmission of bi-directional traffic utilizing a first optical fiber connected between a first port interface of an optical line termination and a first upstream fiber termination of a splitter; and fiber protection functionality utilizing a second optical fiber connected between a second port interface of the optical line termination and a second upstream fiber termination of the splitter fiber;
- The described and/or claimed system wherein said fiber protection functionality includes: maintaining the second one of said port interfaces in an inactive state while transmission of said traffic is being successfully performed utilizing the first optical fiber; determining when a traffic error condition exists with respect to transmission of said traffic on the first optical fiber; and facilitating transmission of said traffic on the second optical fiber after determining that the traffic error condition exists and after activating the second one of said port interfaces;
- The described and/or claimed system wherein facilitating transmission of said traffic on the second optical fiber includes deactivating the first one of said port interfaces, activating the second one of said port interfaces and redirecting said traffic from the first one of said port interfaces to the second one of said port interfaces;
- The described and/or claimed system wherein determining when the traffic error condition exists includes monitoring reception of traffic transmitted on the first optical fiber from at least one optical network termination unit;
- The described and/or claimed system wherein said fiber protection functionality includes: monitoring reception of traffic transmitted on the first optical fiber from at least one optical network termination unit; and determining when a prescribed traffic error condition exists;
- The described and/or claimed system wherein said fiber protection functionality includes deactivating the first one of said port interfaces, activating the second one of said port interfaces and redirecting said traffic from the first one of said port interfaces to the second one of said port interfaces;
- The described and/or claimed system, further comprising: injecting a video signal onto the second optical fiber, thereby enabling video information and protected traffic to be transmitted on the second optical fiber.

In the preceding detailed description, reference has been made to the accompanying drawings that form a part hereof, and in which are shown by way of illustration specific embodiments in which the invention may be practiced. These embodiments, and certain variants thereof, have been described in sufficient detail to enable those skilled in the art to practice the invention. It is to be understood that other suitable embodiments may be utilized and that logical, mechanical and electrical changes may be made without departing from the spirit or scope of the invention. For example, functional blocks shown in the figures could be further combined or divided in any manner without departing from the spirit or scope of the invention. To avoid unnecessary detail, the description omits certain information known to those skilled in the art. The preceding detailed description is, therefore, not intended to be limited to the specific forms set forth herein, but on the contrary, it is intended to cover such alternatives, modifications, and equivalents, as can be reasonably included within the spirit and scope of the appended claims.

## Claims

1. A passive optical network system, comprising:
an optical line termination (signaling module) including a plurality of port interfaces;
a splitter including a plurality of upstream fiber terminations and a plurality of downstream fiber terminations;
a first optical fiber connected between a first one of said port interfaces and a first one of said upstream fiber terminations;
a second optical fiber connected between a second one of said port interfaces and a second one of said upstream fiber terminations; and
a traffic control module configured for facilitating transmission of bi-directional traffic utilizing the first optical fiber and facilitating fiber protection functionality utilizing the second optical fiber.

2. The system of claim 1 wherein said fiber protection functionality includes:
maintaining the second one of said port interfaces in an inactive state while transmission of said traffic is being successfully performed utilizing the first optical fiber;
determining when a traffic error condition exists with respect to transmission of said traffic on the first optical fiber; and
facilitating transmission of said traffic on the second optical fiber after determining that the traffic error condition exists and after activating the second one of said port interfaces.

3. The system of claim 2 wherein facilitating transmission of said traffic on the second optical fiber includes deactivating the first one of said port interfaces, activating the second one of said port interfaces and redirecting said traffic from the first one of said port interfaces to the second one of said port interfaces.

4. The system of claim 1 wherein said fiber protection functionality includes deactivating the first one of said port interfaces, activating the second one of said port interfaces and redirecting said traffic from the first one of said port interfaces to the second one of said port interfaces.

5. The system of claim 1, further comprising:
a video signal injection apparatus coupled to the second optical fiber, thereby enabling video information and protected traffic to be transmitted on the second optical fiber.

6. A method for facilitating passive optical network fiber protection, comprising:
facilitating transmission of bi-directional traffic utilizing a first optical fiber connected between a first port interface of an optical line termination and a first upstream fiber termination of a splitter; and
facilitating fiber protection functionality utilizing a second optical fiber connected between a second port interface of the optical line termination and a second upstream fiber termination of the splitter fiber.

7. The method of claim 6 wherein said fiber protection functionality includes:
maintaining the second one of said port interfaces in an inactive state while transmission of said traffic is being successfully performed utilizing the first optical fiber;
determining when a traffic error condition exists with respect to transmission of said traffic on the first optical fiber; and
facilitating transmission of said traffic on the second optical fiber after determining that the traffic error condition exists and after activating the second one of said port interfaces.

8. The method of claim 6 wherein said fiber protection functionality includes:
monitoring reception of traffic transmitted on the first optical fiber from at least one optical network termination unit; and
determining when a prescribed traffic error condition exists.

9. The method of claim 6 wherein said fiber protection functionality includes deactivating the first one of said port interfaces, activating the second one of said port interfaces and redirecting said traffic from the first one of said port interfaces to the second one of said port interfaces.

10. The method of claim 6, further comprising:
injecting a video signal onto the second optical fiber, thereby enabling video information and
protected traffic to be transmitted on the second optical fiber.
